# EUROPEAN PATENT SPECIFICATION

(11) **EP 2 481 508 B1**
(45) Date of publication and mention of the grant of the patent: **22.06.2016**
(21) Application number: 12250014.3
(22) Date of filing: 27.01.2012
(51) Int. Cl.: B23D 51/16

(54) **Power tool with reciprocating blade**
Werkzeugmaschine mit hin- und hergehender Klinge
Outil électrique avec lame à mouvement alternatif

(30) Priority: 27.01.2011 US 201113015027
(43) Date of publication of application: 01.08.2012
(73) Proprietor: Techtronic Power Tools Technology Limited, Road Town, Tortola (VG)
(72) Inventor: Jerabeck, Jesse J., Anderson South Carolina 29621 (US); Parel, Thomas, Anderson South Carolina 29621 (US); McCurry, Ronald Cecil, West Union South Carolina 29696 (US); Ohi, Taku, Greer South Carolina 29650 (US); Harrison, Ryan, Anderson South Carolina 29621 (US); Watson,Elton, Anderson South Carolina 29621 (US)
(74) Representative: Stevenson-Hill, Jack Patrick

(56) References cited:
- DE-A1- 10 358 575
- US-A- 2 695 522

## Description

### FIELD OF THE INVENTION

The present invention relates to a power tools according to the preamble of claim 1, and more particularly to jig saws such a power tool is generally known by US 2 695 522 A.

### BACKGROUND OF THE INVENTION

Jig saws typically include an electric motor, a blade coupled to a scotch-yoke mechanism, and a transmission including a plurality of spur gears for transferring torque from the motor to the scotch-yoke mechanism. To achieve a desired speed reduction and corresponding increase in torque, several stages of gear reduction are often employed in the transmission. Generally, as the number of stages of gear reduction in the transmission increases, the height of the jig saw must also increase to accommodate all of the spur gears in the gear train. As the height of the jig saw increases, the more difficult it is to control during use. As a result, jig saws typically include a separate handle, extending from the motor housing, that is grasped by a user to guide the saw during a cutting operation.

### SUMMARY OF THE INVENTION

According to the invention there is provided a power tool comprising:
a housing; a motor supported by the housing and including an output shaft; a planetary transmission coupled to the output shaft and including an output carrier; a dual-eccentric scotch yoke mechanism coupled to the output carrier and drivable by the planetary transmission in response to rotation of the output shaft; and a blade coupled to the dual-eccentric scotch yoke mechanism for movement in a reciprocating manner.

Preferably, the dual-eccentric scotch yoke mechanism includes a cam having a first lobe and a second lobe, the second lobe spaced from the first lobe in a direction parallel to a rotational axis of the output carrier, a sawbar coupled to the blade and drivably engaged with the first lobe, and a counterweight drivably engaged with the second lobe.

Preferably, the cam is coupled to the output carrier for co-rotation with the output carrier.

Preferably, the cam is rotatable about the rotational axis of the output carrier, and wherein the rotational axis is positioned between a geometric center of the first lobe and a geometric center of the second lobe.

Preferably, the sawbar and the counterweight are each driven in a reciprocating manner in a direction substantially normal to the rotational axis in response to rotation of the cam and the output carrier.

Preferably, the sawbar and the counterweight reciprocate in opposite directions in response to rotation of the cam and the output carrier.

Preferably, the power tool further comprises a quick-release mechanism coupling the blade and the sawbar.

Preferably, the power tool further comprises an orbital motion assembly configured to selectively impart a pivoting motion to the blade in response to rotation of the output carrier.

Preferably, the orbital motion assembly includes a cam lobe coupled to the output carrier for co-rotation with the output carrier, and a follower drivably engaged with the cam lobe and movable in a reciprocating manner in response to rotation of the output carrier and the cam lobe, wherein the blade is pivotable about a pivot axis oriented substantially normal to the direction of reciprocation of the blade in response to reciprocation of the follower.

Preferably, the orbital motion assembly further includes a yoke pivotably coupled to the housing and positioned between the follower and the blade, and wherein reciprocation of the follower is selectively converted by the yoke to the pivoting motion which is imparted to the blade during reciprocation of the blade.

Preferably, reciprocation of the follower is converted by the yoke to the pivoting motion in only a single direction of reciprocation of the blade.

Preferably, the orbital motion assembly further includes an actuator positioned between the follower and the yoke, and wherein the actuator is movable between a first position, in which reciprocation of the follower is transferred to the yoke, and a second position, in which reciprocation of the follower is not transferred to the yoke.

Preferably, the blade only undergoes reciprocation when the actuator is in the second position.

Preferably, the power tool further comprises a fan rotatable in response to rotation of the output shaft, and a passageway in fluid communication with a source of vacuum, wherein a cooling airflow through the motor is established in response to rotation of the fan and the output shaft, and wherein the cooling airflow is directed into the passageway by the fan after passing through the motor.

Preferably, the passageway is a first passageway, and wherein the power tool further includes a second passageway having an inlet in fluid communication with the first passageway and an outlet proximate the blade.

Preferably, the power tool further comprises a valve supported by the housing for rotation between a first position, in which the inlet is substantially fluidly isolated from the first passageway and the cooling airflow from the fan is substantially prevented from entering the second passageway, and a second position, in which at least a portion of the cooling airflow from the fan is redirected through the second passageway and discharged from the outlet toward the blade.

Preferably, the power tool further comprises a base coupled to the housing, and a sub-base coupled to the base and including a support surface engageable with a workpiece to support the power tool on the workpiece, wherein the passageway is a first passageway, and wherein the base and the sub-base define therebetween a second passageway having an inlet proximate the blade and an outlet in fluid communication with the first passageway.

Preferably, a first portion of the first passageway is defined by the housing, and wherein a second portion of the first passageway is defined by the base.

Preferably, the base is pivotably coupled to the housing about a longitudinal axis oriented substantially parallel with the first passageway, and wherein the first portion of the first passageway is rotatable relative to the second portion of the first passageway in response to the housing pivoting relative to the base.

Preferably, the power tool further comprises a detent assembly positioned between the housing and the base, the detent assembly configured to incrementally position the housing relative to the base in one of a plurality of predetermined orientations, and a locking mechanism configured to inhibit rotation of the housing relative to the base.

Preferably, the housing includes an elongated body portion oriented substantially normal to the direction of reciprocation of the blade, and wherein the motor and the planetary transmission are positioned within the elongated body portion of the housing.

Preferably, the dual-eccentric scotch yoke mechanism is positioned in a head of the housing, and wherein the elongated body portion is configured to be grasped by an operator when the power tool is in use.

According to an embodiment there is provided a power tool comprising: a housing at least partially defining a passageway in selective fluid communication with a source of vacuum; a motor supported by the housing and including an output shaft; a fan rotatable in response to rotation of the output shaft; a transmission mechanism coupled to the output shaft and drivable by the motor in response to rotation of the output shaft; and a blade coupled to the transmission mechanism for movement in a reciprocating manner; wherein a cooling airflow through the motor is established in response to rotation of the fan and the output shaft, and wherein the cooling airflow is directed into the passageway by the fan after passing through the motor.

According to an embodiment there is provided a housing; a motor supported by the housing and including an output shaft; a transmission mechanism coupled to the output shaft and drivable by the motor in response to rotation of the output shaft; a blade coupled to the transmission mechanism for movement in a reciprocating manner; a base pivotably coupled to the housing; a sub-base coupled to the base and including a support surface engageable with a workpiece to support the power tool on the workpiece; and a passageway at least partially defined between the base and the sub-base, the passageway including an inlet positioned proximate the blade and an outlet in selective fluid communication with a source of vacuum; wherein the outlet of the passageway is formed with the base as a single piece.

Other features and aspects of the invention will become apparent by consideration of the following detailed description and accompanying drawings.

### BRIEF DESCRIPTION OF THE DRAWINGS

FIG. 1 is a perspective view of a power tool embodying the invention.
FIG. 2 is an exploded perspective view of the power tool of FIG. 1.
FIG. 3 is an exploded perspective view of a portion of the power tool of FIG. 1.
FIG. 4 is an assembled, cutaway view of a portion of the power tool of FIG. 1 along line 4-4 in FIG. 1, illustrating a blade in a lowermost position with an orbital motion assembly of the power tool deactivated.
FIG. 5 is an assembled, cutaway view of the portion of the power tool of FIG. 4, illustrating the blade in an uppermost position with the orbital motion assembly deactivated.
FIG. 6 is an assembled, cutaway view of the portion of the power tool of FIG.4, illustrating the blade in a lowermost position with the orbital motion assembly activated.
FIG. 7 is an assembled, cutaway view of the portion of the power tool of FIG. 4, illustrating the blade in an uppermost position with the orbital motion assembly activated.
FIG. 8 is a cross-sectional view of the power tool of FIG. 1 along line 8-8 in FIG. 1, illustrating the movement of a cooling airflow through the power tool.
FIG. 9 is a cross-sectional view of the power tool of FIG. 1 along line 9-9 in FIG. 1, illustrating the movement of a cooling airflow through the power tool.
FIG. 10 is a bottom view of the power tool of FIG. 1, illustrating a plurality of recesses formed in a base of the power tool through which debris is directed.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

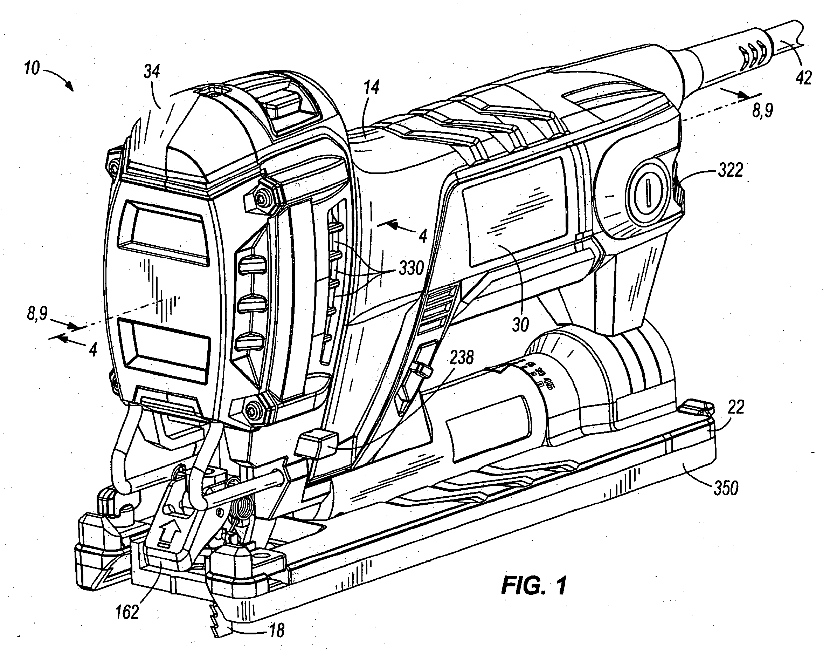

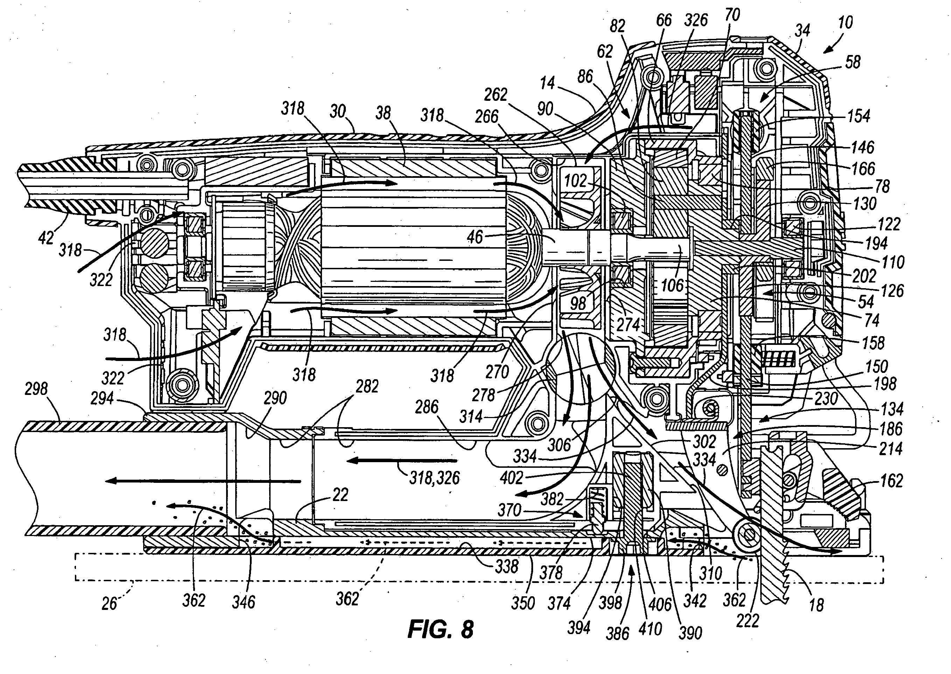

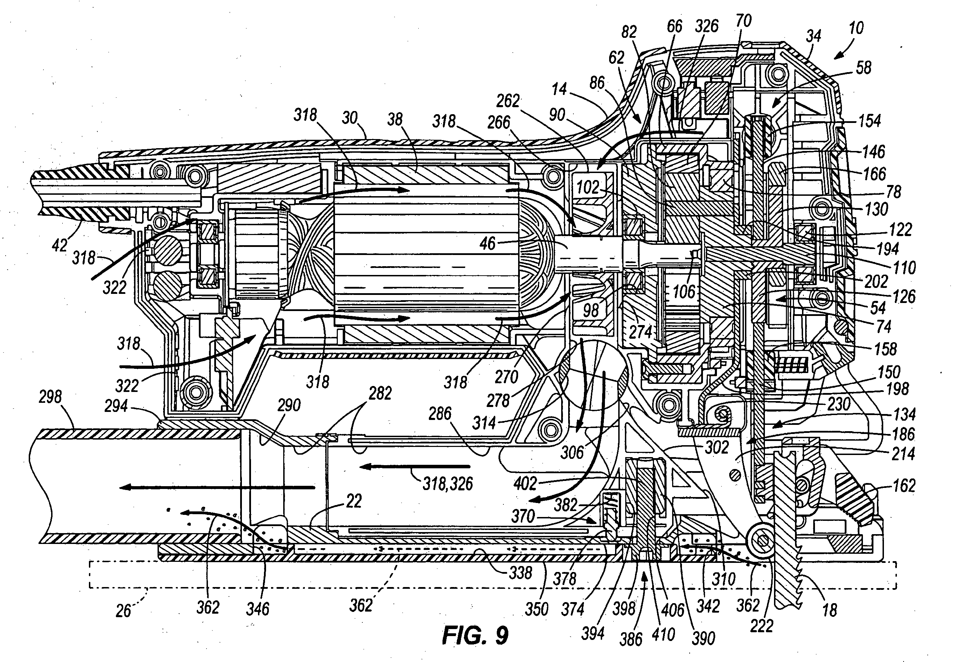

FIG. 1 illustrates a power tool, configured as a jig saw 10, embodying the invention. The jig saw 10 includes a housing 14, a reciprocating saw blade 18 proximate the front of the housing 14, and a base 22 pivotably coupled to the housing 14 to permit adjustment of the cutting angle or the bevel angle of the saw blade 18 relative to the base 22 and an underlying workpiece 26 (FIGS. 8 and 9). The housing 14 includes an elongated body portion 30 (FIG. 1) and a head 34 that defines the front end of the jig saw 10 with respect to the cutting direction along the workpiece 26. As is discussed in detail below, the elongated body portion 30 is grasped by a user of the jig saw 10 during a cutting operation. As a result, the user's hand is maintained in close proximity to the workpiece 26, which enhances the user's control over the jig saw 10 while cutting the workpiece 26.

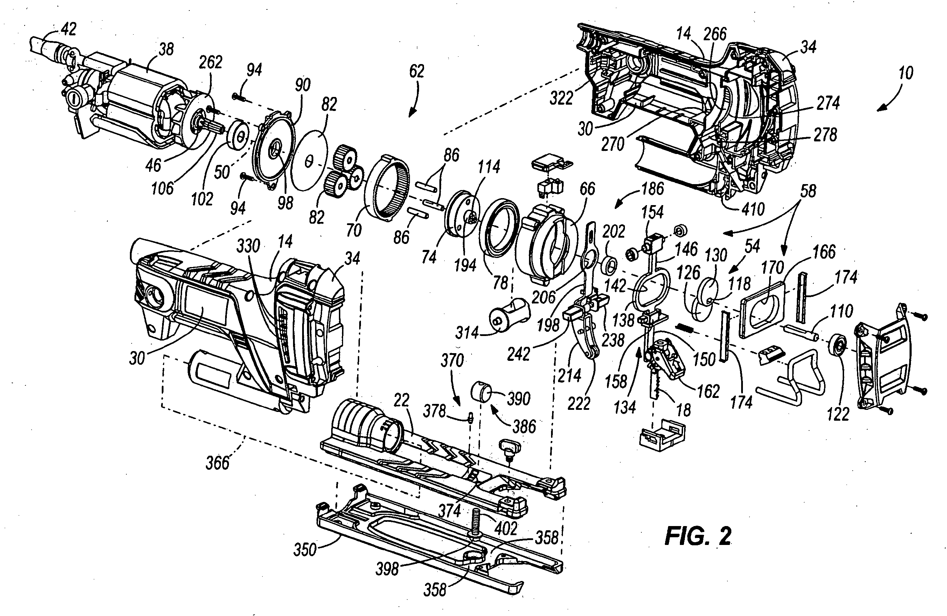

With reference to FIG. 2, the jig saw 10 also includes an electric motor 38 positioned in the elongated body portion 30 of the housing 14. In the illustrated construction of the jig saw 10, a power cord 42 electrically connects the motor 38 to an AC power source (e.g., a household electrical wall outlet) to provide power to the motor 38. Alternatively, the jig saw 10 may include an on-board power source (e.g., a battery) to provide power to the motor 38. The motor 38 includes an output shaft 46 rotatable about a rotational axis 50 and drivably coupled to a cam 54 of a dual-eccentric scotch yoke mechanism 58 (described in further detail below). In the illustrated construction of the jig saw 10, a planetary transmission 62 is positioned between the motor output shaft 46 and the cam 54 to reduce the rotational speed imparted to the cam 54 and increase the torque delivered to the cam 54.

Particularly, the transmission 62 includes a transmission housing 66 positioned in the head 34 of the housing 14 (FIGS. 8 and 9), an outer ring gear 70 fixed within the transmission housing 66, a carrier 74 supported for rotation within the transmission housing 66 by a bearing 78, and three planet gears 82 rotatably coupled to the carrier 74 by respective pins 86 (FIG. 2). Alternatively, the transmission 62 may include more or fewer than three planet gears 82. As an alternative not falling under the scope of the claims, the transmission 62 may be configured such that the carrier 74 is fixed within the transmission housing 66, and the outer ring gear 70 is rotatably supported within the transmission housing 66 to provide the rotational output of the transmission 62. The transmission 62 also includes a cover 90 coupled to the transmission housing 66 (e.g., using fasteners 94) to substantially enclose the ring gear 70, the carrier 74, and the planet gears 82. The cover 90 includes a stepped aperture 98 in which a bearing 102 is received and through which the motor output shaft 46 is inserted. The bearing 102 supports the motor output shaft 46 and orients the other components of the transmission 62 relative to the axis 50. The motor output shaft 46 includes a pinion 106 that is engaged with the planet gears 82. Although the transmission 62 includes only a single-stage, the jig saw 10 may alternatively include a multiple-stage planetary transmission.

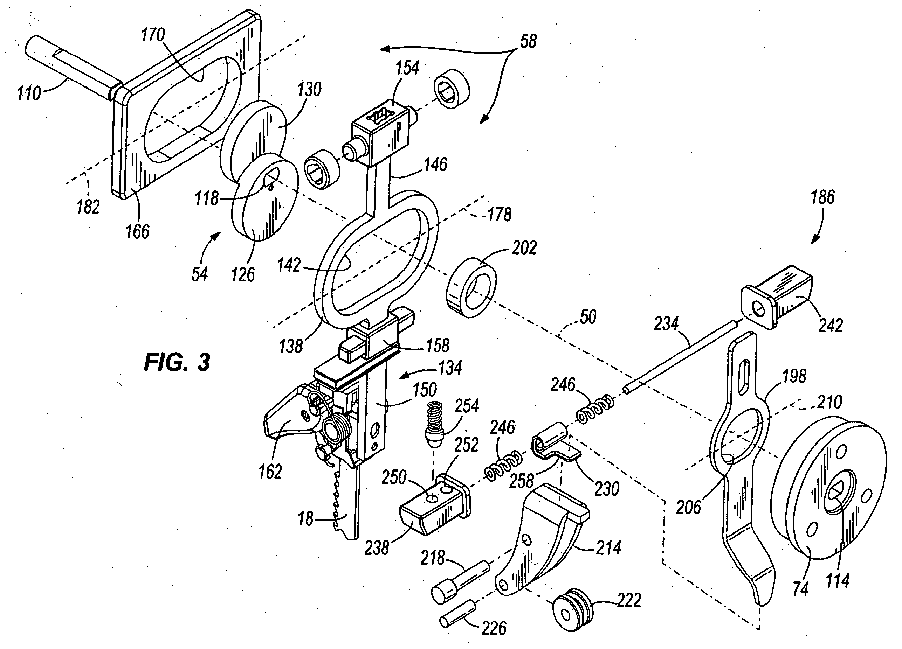

With continued reference to FIG. 2, the scotch-yoke mechanism 58 includes an input shaft 110, coupled for co-rotation with the carrier 74 about the axis 50, to which the cam 54 is fixed for co-rotation. In the illustrated construction of the jig saw 10, a portion of the input shaft 110 includes a non-circular cross-sectional shape, and both the carrier 74 and the cam 54 include apertures 114, 118 having corresponding non-circular shapes in which the input shaft 110 is received using, for example, a press-fit or an interference fit (FIG. 3). As such, the cam 54 is fixed for co-rotation with the carrier 74 via the input shaft 110. Alternatively, any of a number of different processes or structural arrangements may be employed to fix the cam 54 for co-rotation with the carrier 74. As a further alternative, the cam 54 and the carrier 74 may be integrally formed as a single piece. As shown in FIGS. 8 and 9, a front end of the input shaft 110 is supported by a bearing 122 which, in turn, is supported within the housing 14.

With reference to FIG. 3, the cam 54 includes a first lobe 126 and a second lobe 130 spaced from the first lobe 126 in a direction parallel to the rotational axis 50 of the motor output shaft 46 and the carrier 74. Also, the rotational axis 50 is positioned between a geometric center of the first lobe 126 and a geometric center of the second lobe 130. In the illustrated construction of the jig saw 10, seach of the cam lobes 126, 130 includes a substantially circular cross-sectional shape, and the rotational axis 50 and geometric centers of the respective lobes 126, 130 lie in a common plane such that the lobes 126, 130 are oriented 180 degrees opposite one another. Alternatively, the lobes 126, 130 may be positioned relative to each other in any of a number of different ways to impart a desired reciprocating output to the saw blade 18.

With continued reference to FIG. 3, the scotch-yoke mechanism 58 also includes a sawbar 134 coupled to the blade 18 and drivably engaged with the first lobe 126. The sawbar 134 includes a follower portion 138 defining a slot 142 in which the first lobe 126 is positioned, and opposed stems 146, 150 positioned on opposite sides of the follower portion 138. The stems 146, 150 are slidably received within respective bushings 154, 158 which, in turn, are fixed to the housing 14. A quick-release mechanism 162 is secured to the lower stem 150 for coupling the blade 18 and the sawbar 134.

The scotch-yoke mechanism 58 further includes a counterweight 166 drivably engaged with the second lobe 130. The counterweight 166 is configured as a rectangular plate having a slot 170 in which the second cam lobe 130 is positioned. Opposite sides of the counterweight 166 are slidable within respective guide rails 174 which, in turn, are fixed to the housing 14 (FIG. 2). Each of the slots 142, 170 includes a major axis 178, 182 oriented substantially normal to the rotational axis 50 (FIG. 3). Furthermore, the major axes 178, 182 of the respective slots 142, 170 are substantially parallel to each other. As a result, the sawbar 134 and the counterweight 166 reciprocate in opposite directions in response to rotation of the cam 54 (i.e., the counterweight 166 reciprocates upwardly as the sawbar 134 reciprocates downwardly, and the counterweight 166 reciprocates downwardly as the sawbar 134 reciprocates upwardly). Consequently, vibration generated by the reciprocation of the saw bar 134, quick-release mechanism 162, and the blade 18 is attenuated. In addition, by incorporating the planetary transmission 62 and the dual-eccentric scotch yoke mechanism 58 in the jig saw 10, the overall size of the jig saw 10 is reduced compared to a typical prior-art jig saw, which includes a vertically-stacked, multiple-stage, spur gear train.

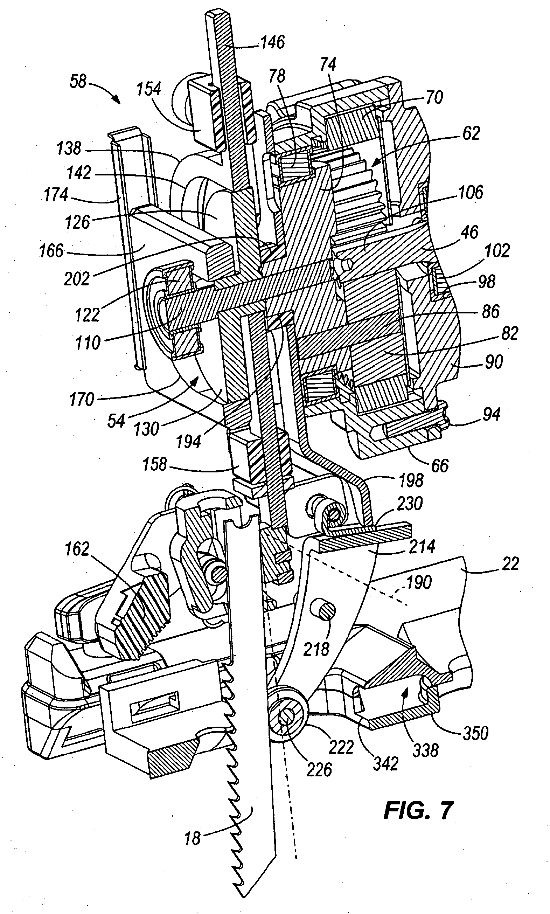

With reference to FIGS. 2 and 3, the jig saw 10 also includes an orbital motion assembly 186 configured to selectively impart a pivoting motion to the saw blade 18 about a pivot axis 190 (FIG. 7), during reciprocation of the saw blade 18, in response to rotation of the motor output shaft 46 and the carrier 74. The assembly 186 includes a cam lobe 194 coupled to the carrier 74 for co-rotation with the carrier 74 (FIG. 2). In the illustrated construction of the jig saw 10, the cam lobe 194 is integrally formed with the carrier 74 as a single piece, and includes a geometric center that is offset from the rotational axis 50. As such, the cam lobe 194 is eccentrically positioned on the carrier 74. Alternatively, the cam lobe 194 may be configured as a separate component from the carrier 74 that is coupled to the carrier 74 in any of a number of different ways.

The orbital motion assembly 186 also includes a follower 198 drivably engaged with the cam lobe 194 via a bushing 202. The follower 198 includes a slot 206, defining a major axis 210 that is oriented substantially normal to the rotational axis 50 of the carrier 74 and the cam lobe 194, in which the cam lobe is positioned (FIG. 3). As such, the follower 198 is movable in a reciprocating manner in response to rotation of the carrier 74 and the cam lobe 194, in a direction that is substantially normal to the axis 50 (i:e., upward and downward).

With continued reference to FIG. 3, the orbital motion assembly 186 further includes a yoke 214 pivotably coupled to the housing 14 (e.g., by a pin 218) and positioned between the follower 198 and the saw blade 18. A roller 222 is coupled to the yoke 214 (e.g., by a pin 226) and engageable with a rear edge of the saw blade 18 (FIGS. 8 and 9). With reference to FIG. 3, the orbital motion assembly 186 also includes an actuator or a transfer plate 230 selectively positioned between the follower 198 and the yoke 214. In the illustrated construction of the jig saw 10, the transfer plate 230 is pivotably supported on a pin 234, one end of which is coupled to a first button 238, and an opposite end of which is coupled to a second button 242. Respective springs 246 are positioned on either side of the transfer plate 230 to substantially center the transfer plate 230 between the respective buttons 238, 242. One of the buttons (i.e., button 238) includes two spaced recesses 250, 252 in which a spring-biased detent 254 is alternately received.

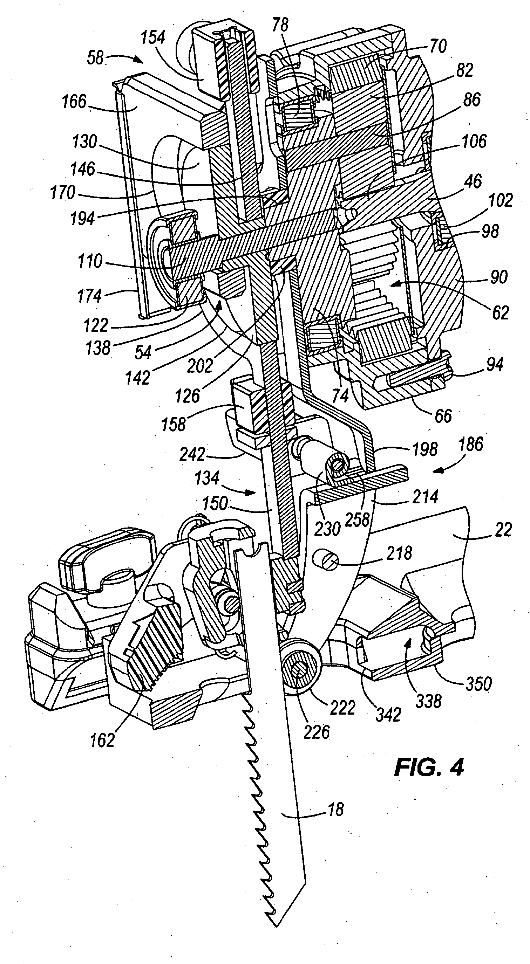

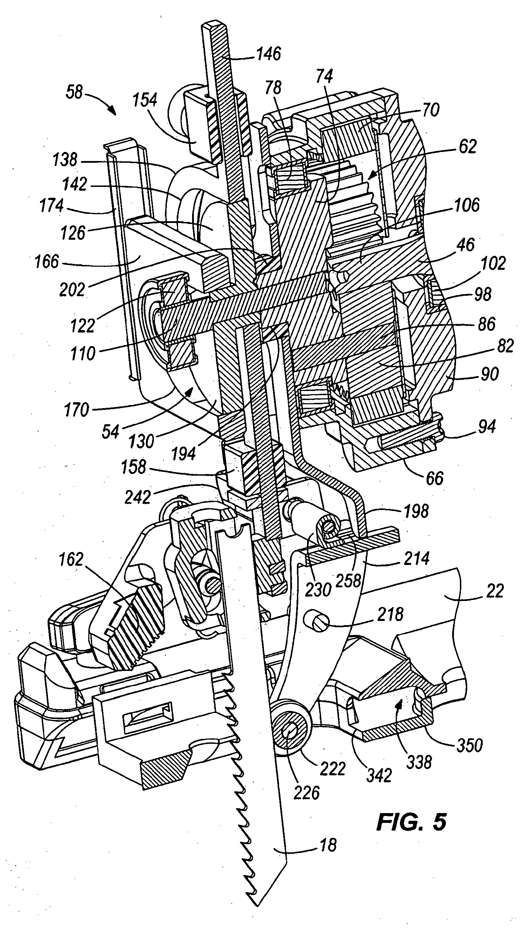

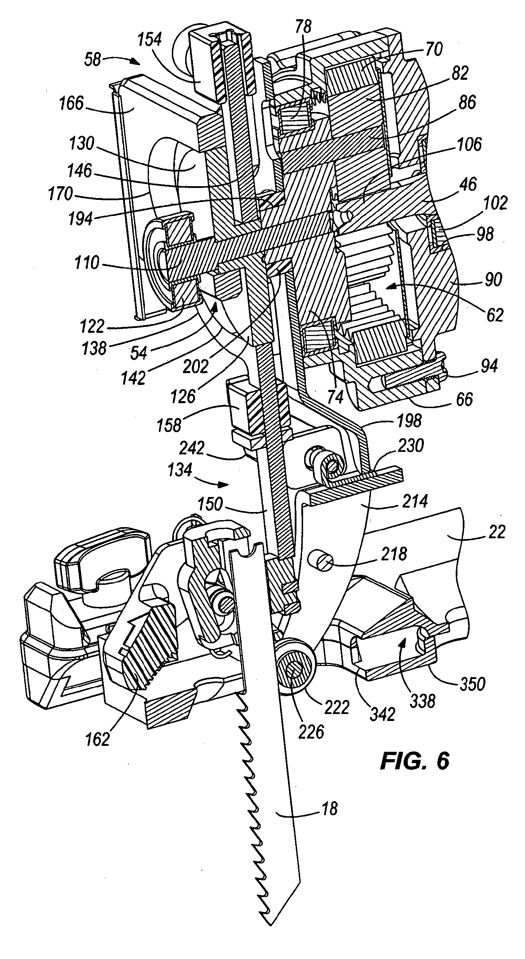

With continued reference to FIG. 3, the transfer plate 230 includes a notch 258 which effectively reduces the width of the transfer plate 230 proximate the distal end of the plate 230. When the transfer plate 230 is moved to a first position (e.g., by depressing the button 242), the transfer plate 230 is positioned between the follower 198 and the yoke 214 (FIGS. 6 and 7). However, when the transfer plate 230 is moved to a second position (e.g., by depressing the button 238), the notch 258 is moved inline with the follower 198 and the yoke 214 such that the transfer plate 230 is no longer positioned between the follower 198 and the yoke 214 (FIGS. 4 and 5). The detent 254 is received within the recess 252 when the transfer plate 230 is in the first position, while the detent 254 is received within the recess 250 when the transfer plate 230 is in the second position.

In operation of the jig saw 10 with the orbital motion assembly 186 deactivated, the transfer plate 230 is moved to the second position (shown in FIGS. 4 and 5) by the user depressing the button 238. As a result, the reciprocating motion of the follower 198 is not transferred to the yoke 214 during reciprocation of the saw blade 18. Consequently, the saw blade 18 will reciprocate upwardly and downwardly, in a substantially linear direction. In operation of the jig saw 10 with the orbital motion assembly 186 activated, the transfer plate 230 is moved to the first position (shown in FIGS. 6 and 7) by the user depressing the button 242. As a result, the reciprocating motion of the follower 198 is transferred to the yoke 214 during reciprocation of the saw blade 18. The yoke 214, in turn, converts the reciprocating motion of the follower 198 into a pivoting motion, which is imparted to the saw blade 18 via the roller 222 (FIG. 7).

In the illustrated construction of the jig saw 10, the reciprocation of the follower 198 is timed with respect to the reciprocation of the blade 18 such that the follower 198 reciprocates downwardly as the blade 18 reciprocates upwardly. As such, the assembly 186 is operable to pivot the blade 18 about the pivot axis 190 when the saw blade 18 is reciprocating upwardly. This movement generally imparts an "orbiting" motion to the serrated or toothed edge of the saw blade 18, which generally improves the speed of cuts made in the workpiece 26.

With reference to FIG. 8, the jig saw 10 includes a dual-sided centrifugal fan 262 coupled for co-rotation with the output shaft 46 of the motor 38. In the illustrated construction of the jig saw 10, the fan 262 is press-fit or interference-fit to the motor output shaft 46. Alternatively, the fan 262 may be coupled to the motor output shaft 46 in any of a number of different ways. The fan 262 is positioned within a volute or scroll 266, one-half of which is shown in FIG. 2, defined in the housing 14. The scroll 266 includes a progressively increasing cross-sectional area to accommodate the expansion of a pressurized airflow as it is circulated in the scroll from an inlet of the scroll 266 (e.g., either a rearward-facing inlet 270 or a forward-facing inlet 274) to an outlet 278 of the scroll 266.

The jig saw 10 also includes a passageway 282 in fluid communication with the outlet 278 of the scroll 266 and a source of vacuum (FIG. 8). In the illustrated construction of the jig saw 10, an upstream portion 286 of the passageway 282 is defined by the housing 14, while a downstream portion 290 of the passageway 282 is defined by the base 22 (see also FIG. 2). The base 22 also includes an exhaust port 294 in fluid communication with the passageway 282 and having an inner diameter sized to receive a standard 1-1/4 inch (3,175 cm) vacuum wand 298 (FIG. 8).

The jig saw 10 further includes a second passageway 302 having an inlet 306 in selective fluid communication with the passageway 282, and an outlet 310 proximate the saw blade 18. The jig saw 10 also includes a valve 314 positioned downstream of the scroll outlet 278 and supported by the housing 14 for rotation between a first position (FIG. 9), in which the inlet 306 of the second passageway 302 is substantially fluidly isolated from the passageway 282, and a second position (FIG. 8), in which the inlet 306 of the second passageway 302 is in fluid communication with the passageway 282. Any of a number of different actuators may be employed to rotate the valve 314 between the first and second positions.

In operation of the jig saw 10, the rotation of the fan 262 induces a motor-cooling airflow (identified with arrow 318) through the rear of the jig saw 10, through the motor 38, and toward the front of the jig saw 10, leading to the rearward-facing inlet 270 of the scroll 266. The cooling airflow 318 is drawn into the housing 14 through a plurality of vents 322 proximate the rear of the housing 14. A supplemental, transmission-cooling airflow (identified with arrow 326) is also induced around the transmission housing 66, leading to the forward-facing inlet 274 of the scroll 266. The cooling airflow 326 is drawn into the housing 14 through a plurality of vents 330 proximate the sides of the housing 14 (FIG. 1). When the valve 314 is rotated to the first position (FIG. 9), the combined motor-cooling and transmission-cooling airflow 318, 326 is discharged through the valve 314 and into the passageway 282, and no portion of the combined airflow 318, 326 is diverted into the second passageway 302. If the jig saw 10 is unattached to a vacuum source (e.g., the vacuum wand 298), the combined airflow 318, 326 is exhausted toward the rear of the jig saw 10, through the passageway 282 and exhaust port 294, and to the atmosphere. If, however, the jig saw 10 is attached to a vacuum source, the combined airflow 318, 326 is ultimately exhausted to the vacuum source. In cooling the motor 38 in this way (i.e., by exhausting the heated, motor-cooling airflow 318 away from the elongated body portion 30 of the housing 14), a user of the jig saw 10 may grasp the elongated body portion 30 of the housing 14 during the normal course of using the jig saw 10. Consequently, the user's hand is maintained in close proximity to the workpiece 26, which enhances the user's control over the jig saw 10 while cutting the workpiece 26.

When the valve 314 is rotated to the second position (FIG. 8), a portion of the combined motor-cooling and transmission-cooling airflow 318, 326 is diverted into the second passageway 302. The diverted airflow 334 is discharged from the outlet 310 of the second passageway 302 past the saw blade 18 to facilitate the removal of debris from the cutting zone (i.e., the region of the workpiece 26 in close proximity to the saw blade 18).

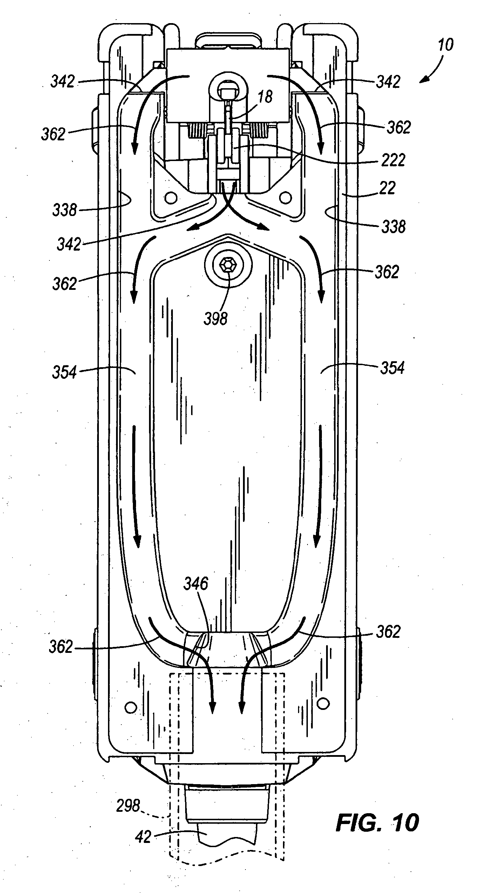

With continued reference to FIGS. 8 and 9, the jig saw 10 includes a debris passageway 338 having an inlet 342 proximate the blade 18 and an outlet 346 in fluid communication with the passageway 282. In the illustrated construction of the jig saw 10, the debris passageway 338 is defined between the base 22 and a sub-base 350 removably coupled to the base 22 (see also FIG. 2). Particularly, an upper portion of the debris passageway 338 is defined by a plurality of channels 354 formed in the base 22 (FIG. 10), while a lower portion of the debris passageway 338 is defined by a corresponding plurality of channels 358 formed in the sub-base 350 (FIG. 2). An aperture in the base 22 provides the outlet 346 of the debris passageway 338 (FIG. 10) and is positioned proximate the rear of the base 22.

In operation of the jig saw 10, the vacuum source (e.g., the vacuum wand 298) induces an airflow (identified with arrow 362) through the debris passageway 338, sucking debris from the cutting zone through the inlet 342, through the debris passageway 338, and through the outlet 346, where the debris enters the passageway 282 and is ultimately exhausted to the vacuum source with the combined motor-cooling and transmission cooling airflow 318, 326.

With reference to FIG. 2, the housing 14 is pivotably coupled to the base 22 about a pivot axis 366, oriented substantially parallel with the passageway 282, to adjust the cutting angle of the blade 18 with respect to the workpiece 26. Accordingly, the upstream portion 286 of the passageway 282, which is defined by the housing 14, is rotatable relative to the downstream portion 290 of the passageway 282, which is defined by the base 22, in response to pivoting movement between the housing 14 and the base 22.

With continued reference to FIG. 2, the jig saw 10 includes a detent assembly 370 positioned between the housing 14 and the base 22 to incrementally position the housing 14 relative to the base 22 in one of a plurality of predetermined orientations. The detent assembly 370 includes a plurality of adjacent recesses 374 in an arcuate portion of the base 22, and a spring-biased detent 378 at least partially received within a pocket 382 in the housing 14 (see FIGS. 8 and 9) that is receivable in one of the recesses 374. The recesses 374 are spaced by incremental amounts (e.g., 15 degrees) that correlate with standard or typical cutting or bevel angles of the blade 18 relative to the workpiece 26 (e.g., 0 degrees; +/- 45 degrees; +/- 60 degrees, etc.). Alternatively, the detent 378 may be supported by the base 22, and the recesses 374 may be defined by the housing 14.

The jig saw 10 also includes a locking mechanism 386 configured to inhibit rotation of the housing 14 relative to the base 22 after the desired cutting or bevel angle of the saw blade 18 is decided. With reference to FIG. 2, the locking mechanism 386 includes a cylindrical locknut 390 that is positioned within a generally cylindrical pocket 394 in the housing 14, one-half of which is shown in FIG. 2. The locking mechanism 386 also includes a threaded fastener 398 having a shank 402 inserted through an aperture 406 in the base 22. The shank 402 is threaded to the locknut 390, and passes through a downwardly facing, arcuate slot 410 in the housing 14 (FIGS. 2, 8, and 9). To secure the housing 14 relative to the base 22 in a desired orientation, the user of the jig saw 10 would tighten locking mechanism 386 by turning the fastener 398 in a clockwise direction, from the point of view of FIG. 10. This pulls the housing against the base 22 to frictionally secure the housing 14 with respect to the base 22. The locking mechanism 386 may subsequently be loosened by turning the fastener 398 in a counterclockwise direction to release the housing 14 from the base 22. The locking mechanism 386 may be engaged to secure the housing 14 relative to the base 22 in one of the orientations defined by one of the recesses 374 of the detent assembly 370. The locking mechanism 386 may also be engaged to secure the housing 14 relative to the base 22 in an orientation that does not correlate with one of the recesses 374 of the detent assembly 370.

Various features of the invention are set forth in the following claims.

## Claims

1. A power tool (10) comprising:
a housing (14);
a motor (38) supported by the housing (14) and including an output shaft (46); and
a planetary transmission (62) coupled to the output shaft and including an output carrie (74); **characterized by**
a dual-eccentric scotch yoke mechanism (58) coupled to the output carrier (74) and drivable by the planetary transmission (62) in response to rotation of the output shaft (46); and
a blade (18) coupled to the dual-eccentric scotch yoke mechanism (58) for movement in a reciprocating manner.

2. The power tool of claim 1, wherein the dual-eccentric scotch yoke mechanism (58) includes
a cam (54) having a first lobe (126) and a second lobe (130), the second lobe (130) spaced from the first lobe (126) in a direction parallel to a rotational axis (50) of the output carrier (74),
a sawbar (134) coupled to the blade (18) and drivably engaged with the first lobe (126), and
a counterweight (166) drivably engaged with the second lobe (130).

3. The power tool of claim 2, wherein the cam (54) is coupled to the output carrier (74) for co-rotation with the output carrier (74), or wherein the cam (54) is rotatable about the rotational axis (50) of the output carrier (74) and the rotational axis (50) is positioned between a geometric center of the first lobe (126) and a geometric center of the second lobe (130).

4. The power tool of claim 3, wherein the sawbar (134) and the counterweight (166) are each driven in a reciprocating manner in a direction substantially normal to the rotational axis (50) in response to rotation of the cam (54) and the output carrier (74), or are driven to reciprocate in opposite directions in response to rotation of the cam (54) and the output carrier (74).

5. The power tool of claim 1, further comprising an orbital motion assembly (186) configured to selectively impart a pivoting motion to the blade (18) in response to rotation of the output carrier (74), wherein the orbital motion assembly (186) includes
a cam lobe (194) coupled to the output carrier (74) for co-rotation with the output carrier (74), and
a follower (198) drivably engaged with the cam lobe (194) and movable in a reciprocating manner in response to rotation of the output carrier (74) and the cam lobe (194), wherein the blade (18) is pivotable about a pivot axis (190) oriented substantially normal to the direction of reciprocation of the blade (18) in response to reciprocation of the follower (198).

6. The power tool of claim 5, wherein the orbital motion assembly (186) further includes a yoke (214) pivotably coupled to the housing (14) and positioned between the follower (198) and the blade (18) and wherein reciprocation of the follower (198) is selectively converted by the yoke (214) to the pivoting motion which is imparted to the blade (18) during reciprocation of the blade (18), or reciprocation of the follower (198) is converted by the yoke (214) to the pivoting motion in only a single direction of reciprocation of the blade (18).

7. The power tool of claim 6, wherein the orbital motion assembly (186) further includes an actuator (230) positioned between the follower (198) and the yoke (214), and wherein the actuator (230) is movable between a first position, in which reciprocation of the follower (198) is transferred to the yoke (214), and a second position, in which reciprocation of the follower (198) is not transferred to the yoke (214).,

8. The power tool of claim 7, wherein the blade (18) only undergoes reciprocation when the actuator (230) is in the second position.

9. The power tool of claim 1, further comprising
a fan (262) rotatable in response to rotation of the output shaft (46), and
a passageway (282) in fluid communication with a source of vacuum,
wherein a coolling airflow through the motor (38) is established in response to rotation of the fan (262) and the output shaft (46), and wherein the cooling airflow is directed into the passageway (282) by the fan (262) after passing through the motor (38).

10. The power tool of claim 9, wherein the passageway (282) is a first passageway (282), and wherein the power tool (10) further includes second passageway (302) having an inlet (306) in fluid communication with the first passageway (282) and an outlet (310) proximate the blade (18), and optionally a valve (314) supported by the housing (14) for rotation between a first position in which the inlet (306) is substantially fluidly isolated from the first passageway (282) and the cooling airflow from the fan (262) is substantially prevented from entering the second passageway (302) and a second position in which at least a portion of the cooling air flow from the fan (262) is redirected through the second passageway (302) and discharged from the outlet (310) toward the blade (18).

11. The power tool of claim 9, further comprising
a base (22) coupled to the housing (14), and
a sub-base (350) coupled to the base (22) and including a support surface engageable with a workpiece to support the power tool (10) on the workpiece,
wherein the passageway (282) is a first passageway (282), and wherein the base (22) and the sub-base (350) define therebetween a second passageway (338) having an inlet (342) proximate the blade (18) and an outlet (346) in fluid communication with the first passageway (282).

12. The power tool of claim 11, wherein a first portion (286) of the first passageway (282) is defined by the housing (14) and wherein a second portion (290) of the first passageway (282) is defined by the base (22) for wherein the base (22) is pivotably coupled to the housing (14) about a longitudinal axis (366) oriented substantially parallel with the first passageway (282), and wherein the first portion (286) of the first passageway (282) is rotatable relative to the second portion (290) of the first passageway (282) in response to the housing (14) pivoting relative to the base (22).

13. The power tool of claim 11, further comprising
a detent assembly (370) positioned between the housing (14) and the base (22), the detent assembly (370) configured to incrementally position the housing (14) relative to the base (22) in one of a plurality of predetermined orientations, and
a locking mechanism (386) configured to inhibit rotation of the housing (14) relative to the base (22).

14. The power tool of claim 1, wherein the housing (14) includes an elongated body portion (30) oriented substantially normal to the direction of reciprocation of the blade (18), and wherein the motor (38) and the planetary transmission (62) are positioned within the elongated body portion (30) of the housing (14).

15. The power tool of claim 14, wherein the dual-eccentric scotch yoke mechanism (58) is positioned in a head (34) of the housing (14), and wherein the elongated body portion (30) is configured to be grasped by an operator when the power too (10) is in use.

## Patentansprüche

1. Elektrowerkzeug (10), umfassend:
ein Gehäuse (14);
einen vom Gehäuse (14) getragenen Motor (38), der eine Antriebswelle (46) umfasst, und
ein mit der Antriebswelle gekoppeltes Planetengetriebe (62), das einen Ausgangsträger (74) umfasst;
**gekennzeichnet durch**:
einen mit dem Ausgangsträger (74) gekoppelten Doppelexzenter-Kurbelschleifenmechanismus (58), der in Reaktion auf die Rotation der Ausgangswelle (46) **durch** das Planetengetriebe (62) antreibbar ist; und
eine zum Hin- und Herbewegen mit dem Kurbelschleifenmechanismus (58) gekoppelte Klinge (18).

2. Werkzeug nach Anspruch 1, wobei der Kurbelschleifenmechanismus (58) umfasst
einen Nocken (54) mit einem ersten Vorsprung (126) und einem zweiten Vorsprung (130), wobei der zweite Vorsprung (130) in einer Richtung, die parallel zu einer Rotationsachse (50) des Ausgangsträgers (74) ist, vom ersten Vorsprung (126) beabstandet ist;
ein mit der Klinge (18) gekoppeltes Sägeschwert (134), das antreibbar mit dem ersten Vorsprung (126) im Eingriff liegt, und
ein Gegengewicht (166), das mit dem zweiten Vorsprung (130) antreibbar im Eingriff liegt.

3. Werkzeug nach Anspruch 2, wobei der Nocken (54) zur gemeinsamen Rotation mit dem Ausgangsträger (74) mit dem Ausgangsträger (74) gekoppelt ist, oder wobei der Nocken (54) um die Rotationsachse (50) des Ausgangsträgers (74) rotierbar ist und die Rotationsachse (50) zwischen einer geometrischen Mitte des ersten Vorsprungs (126) und einer geometrischen Mitte des zweiten Vorsprungs (130) liegt.

4. Werkzeug nach Anspruch 3, wobei das Sägeschwert (134) und das Gegengewicht (166) in Reaktion auf die Rotation des Nockens (54) und des Ausgangsträgers (74) jeweils im Wesentlichen normal zur Rotationsachse (50) hin- und herbewegend angetrieben werden oder in Reaktion auf die Rotation des Nockens (54) und des Ausgangsträgers (74) zur Hin- und Herbewegung in entgegengesetzten Richtungen angetrieben werden.

5. Werkzeug nach Anspruch 1, ferner umfassend eine Einrichtung (186) zur kreisförmigen Bewegung, die derart konfiguriert ist, dass sie in Reaktion auf eine Rotation des Ausgangsträgers (74) selektiv eine Schwenkung auf die Klinge (18) überträgt, wobei die Einrichtung (186) umfasst:
einen mit dem Ausgangsträger (74) gekoppelten Nockenvorsprung (194) zur gemeinsamen Rotation mit dem Ausgangsträger (74)
und
einen Nockenstößel (198), der mit dem Nockenvorsprung (194) antreibbar im Eingriff liegt und in Reaktion auf die Rotation des Ausgangsträgers (74) und des Nockenvorsprungs (194) hin- und herbeweglich ist, wobei die Klinge (18) in Reaktion auf die Hin- und Herbewegung des Stößels (198) um eine im Wesentlichen normal zur Bewegungsrichtung der Klinge orientierte Schwenkachse (190) schwenkbar ist.

6. Werkzeug nach Anspruch 5, wobei die Einrichtung (186) ferner einen Bügel (214) umfasst, der mit dem Gehäuse (14) schwenkbar gekoppelt und zwischen Stößel (198) und Klinge (18) positioniert ist, und wobei die Hin- und Herbewegung des Stößels (198) vom Bügel (214) bei der Hin- und Herbewegung der Klinge (18) in die auf die Klinge übertragene Schwenkung oder bei der Hin- und Herbewegung des Stößels (198) in eine Schwenkung in nur einer Hin- und Herbewegungsrichtung der Klinge (18) umgewandelt wird.

7. Werkzeug nach Anspruch 6, wobei die Einrichtung (186) ferner einen Aktor (230) umfasst, der zwischen Stößel (189) und Bügel (214) positioniert ist, und wobei der Aktor (230) zwischen einer ersten Position, in der die Hin- und Herbewegung des Stößels (198) auf den Bügel (214) übertragen wird, und einer zweiten Position, in der die Hin- und Herbewegung des Stößels (198) auf den Bügel (214) nicht übertragen wird, beweglich ist.

8. Werkzeug nach Anspruch 7, wobei die Klinge (18) sich nur dann hin- und herbewegt, wenn der Aktor (230) sich in der zweiten Position befindet.

9. Werkzeug nach Anspruch 1, ferner umfassend:
einen in Reaktion auf die Rotation der Ausgangswelle (46) rotierbaren Ventilator (262) sowie
einen Durchgang (282), der mit einer Vakuumquelle in Fließverbindung steht,
wobei eine kühlende Luftströmung durch den Motor (38) in Reaktion auf die Rotation des Ventilators (262) und der Ausgangswelle (46) hergestellt wird, und wobei die kühlende Luftströmung nach dem Durchlaufen des Motors (38) vom Ventilator (262) in den Durchgang (282) geleitet wird.

10. Werkzeug nach Anspruch 9, wobei der Durchgang (282) ein erster Durchgang (282) ist und wobei das Werkzeug (10) ferner einen zweiten Durchgang (302) mit einer Einlaßöffnung (306), die mit dem ersten Durchgang (282) in Fließverbindung steht, und einer nahe der Klinge (18) angeordneten Ablaßöffnung (310), sowie wahlweise ein vom Gehäuse (14) getragenes Ventil (314) zum Rotieren zwischen einer ersten Position, in der die Einlaßöffnung (306) gegenüber dem ersten Durchgang (282) im Wesentlichen fluidisch isoliert ist und der Eintritt der kühlenden Luftströmung des Ventilators (262) in den zweiten Durchgang (302) im Wesentlichen verhindert wird, und einer zweiten Position, in der zumindest ein Teil der kühlenden Luftströmung des Ventilators (262) über den zweiten Durchgang (302) umgeleitet und aus der Ablaßöffung (310) in Richtung der Kline (18) entladen wird, umfasst.

11. Werkzeug nach Anspruch 9, ferner umfassend:
ein mit dem Gehäuse (16) gekoppeltes Unterteil (22) und
eine mit dem Unterteil (22) gekoppelte Unterlage (350), die eine Tragfläche aufweist, die in ein Werkstück eingreifen kann, um das Werkzeug (10) auf dem Werkstück zu tragen,
wobei der Durchgang (282) ein erster Durchgang (282) ist, wobei Unterteil (22) und Unterlage (350) dazwischen einen zweiten Durchgang (338) mit einer nahe der Klinge (18) angeordneten Einlaßöffnung (342) und einer Ablaßöffnung (346), die mit dem ersten Durchgang (282) in Fließverbindung steht, definieren.

12. Werkzeug nach Anspruch 11, wobei ein erster Abschnitt (286) des ersten Durchgangs (282) durch das Gehäuse (14) definiert wird und wobei ein zweiter Abschnitt (290) des ersten Durchgangs (282) durch das Unterteil (22) definiert wird, oder wobei das Unterteil (22) mit dem Gehäuse (14) um eine im Wesentlichen parallel zum ersten Durchgang (282) verlaufende Längsachse (366) schwenkbar gekoppelt ist und wobei der erste Abschnitt (286) des ersten Durchgangs (282) in Reaktion auf die Schwenkung des Gehäuses (14) relativ zum Unterteil (22) relativ zum zweiten Abschnitt (290) des ersten Durchgangs (282) rotierbar ist.

13. Werkzeug nach Anspruch 11, ferner umfassend:
eine zwischen dem Gehäuse (14) und dem Unterteil (22) positionierte Rasteinrichtung (370), wobei die Rasteinrichtung (370) derart konfiguriert ist, dass sie das Gehäuse (14) relativ zum Unterteil (22) in einer einer Mehrzahl vorbestimmter Orientierungen stufenweise positioniert und
einen Verriegelungsmechanismus (386), der zur Hemmung der Rotation des Gehäuses (14) relativ zum Unterteil (22) konfiguriert ist.

14. Werkzeug nach Anspruch 1, wobei das Gehäuse (14) einen länglichen Körperabschnitt (30) umfasst, der im Wesentlichen normal zur Hin- und Herbewegungsrichtung der Klinge (18) orientiert ist, und wobei der Motor (38) und das Planetengetriebe (62) innerhalb des länglichen Körperabschnitts (30) des Gehäuses (16) positioniert sind.

15. Werkzeug nach Anspruch 14, wobei der Mechanismus (58) in einem Oberteil (34) des Gehäuses (14) positioniert ist und wobei der längliche Körperabschnitt (30) derart konfiguriert ist, dass er beim Einsatz des Werkzeugs (10) von einem Bediener gegriffen werden kann.

## Revendications

1. Outil électrique (10) comprenant :
un carter (14) ;
un moteur (38) supporté par le carter (14) et comportant un arbre de sortie (46) ; et
une transmission planétaire (62) couplée à l'arbre de sortie et comportant un support de sortie (74) ;
**caractérisé par**
un système manivelle-cadre (58) à deux excentriques couplé au support de sortie (74) et pouvant être entraîné par la transmission planétaire (62) en réaction à la rotation de l'arbre de sortie (46) ; et
une lame (18) couplée au système manivelle-cadre (58) à deux excentriques pour subir un mouvement de va-et-vient.

2. Outil électrique selon la revendication 1, dans lequel le système manivelle-cadre (58) à deux excentriques comporte :
une came (54) présentant un premier lobe (126) et un second lobe (130), le second lobe (130) étant distant du premier lobe (126) dans un sens parallèle à l'axe de rotation (50) du support de sortie (74),
une tringle de course (134) couplée à la lame (18) et en prise avec le premier lobe (126) de manière à pouvoir être entraînée, et
un contrepoids (166) en prise avec le second lobe (130) de manière à pouvoir être entraîné.

3. Outil électrique selon la revendication 2, dans lequel la came (54) est couplée au support de sortie (74) de manière à subir une co-rotation avec le support de sortie (74), ou dans lequel la came (54) peut subir une rotation sur l'axe de rotation (50) du support de sortie (74) et l'axe de rotation (50) est situé entre le centre géométrique du premier lobe (126) et le centre géométrique du second lobe (130).

4. Outil électrique selon la revendication 3, dans lequel la tringle de course (134) et le contrepoids (166) sont chacun entraînés selon un mouvement de va-et-vient dans un sens sensiblement perpendiculaire à l'axe de rotation (50) en réaction à la rotation de la came (54) et du support de sortie (74), ou sont entraînés pour effectuer un mouvement de va-et-vient dans des sens opposés en réaction à la rotation de la came (54) et du support de sortie (74).

5. Outil électrique selon la revendication 1, comprenant en outre un ensemble à mouvement orbital (186) configuré pour conférer de manière sélective un mouvement de pivotement à la lame (18) en réaction à la rotation du support de sortie (74), l'ensemble à mouvement orbital (186) comportant :
un lobe de came (194) couplé au support de sortie (74) pour pouvoir subir une co-rotation avec le support de sortie (74),
et
un suiveur (198) en prise avec le lobe de came (194) de manière à pouvoir être entraîné, et susceptible d'être mu en va-et-vient en réaction à la rotation du support de sortie (74) et du lobe de came (194), la lame (18) pouvant pivoter sur un axe de pivotement (190) orienté de manière sensiblement perpendiculaire au sens du va-et-vient de la lame (18) en réaction au va-et-vient du suiveur (198).

6. Outil électrique selon la revendication 5, dans lequel l'ensemble à mouvement orbital (186) comporte en outre un étrier (214) couplé de manière pivotante au carter (14) et situé entre le suiveur (198) et la lame (18), et dans lequel le va-et-vient du suiveur (198) est transformé de manière sélective par l'étrier (214) en un mouvement de pivotement conféré à la lame (18) pendant le va-et-vient de la lame (18), ou bien le va-et-vient du suiveur (198) est transformé par l'étrier (214) en un mouvement de pivotement dans seulement un seul sens du va-et-vient de la lame (18).

7. Outil électrique selon la revendication 6, dans lequel l'ensemble à mouvement orbital (186) comporte en outre un actionneur (230) situé entre le suiveur (198) et l'étrier (214), et dans lequel l'actionneur (230) peut passer d'une première position, dans laquelle le va-et-vient du suiveur (198) est transféré à l'étrier (214), à une seconde position, dans laquelle le va-et-vient du suiveur (198) n'est pas transféré à l'étrier (214).

8. Outil électrique selon la revendication 7, dans lequel la lame (18) ne subit de va-et-vient que lorsque l'actionneur (230) se trouve dans la seconde position.

9. Outil électrique selon la revendication 1, comprenant en outre :
un ventilateur (262) pouvant subir une rotation en réaction à la rotation de l'arbre de sortie (46), et
un passage (282) en communication fluidique avec une source de vide,
dans lequel un flux d'air de refroidissement traversant le moteur (38) est établi en réaction à la rotation du ventilateur (262) et de l'arbre de sortie (46), et dans lequel le flux d'air de refroidissement est dirigé vers le passage (282) par le ventilateur (262) après avoir traversé le moteur (38).

10. Outil électrique selon la revendication 9, dans lequel le passage (282) est un premier passage (282), et dans lequel l'outil électrique (10) comporte en outre un second passage (302) présentant un orifice d'entrée (306) en communication fluidique avec le premier passage (282) et un orifice de sortie (310) à proximité de la lame (18), et éventuellement une vanne (314) supportée par le carter (14) de manière à pouvoir tourner entre une première position, dans laquelle l'orifice d'entrée (306) est sensiblement isolé des fluides du premier passage (282) et le flux d'air de refroidissement en provenance du ventilateur (262) est sensiblement empêché de pénétrer dans le second passage (302), et une seconde position dans laquelle au moins une partie du flux d'air de refroidissement en provenance du ventilateur (262) est redirigée dans le second passage (302) et évacuée par l'orifice de sortie (310) vers la lame (18).

11. Outil électrique selon la revendication 9, comprenant en outre :
une semelle (22) couplée au carter (14), et
une sous-semelle (350) couplée à la semelle (22) et comportant une surface de support pouvant être en contact avec une pièce à découper afin de soutenir l'outil électrique (10) sur la pièce à découper,
dans lequel le passage (282) est un premier passage (282), et dans lequel la semelle (22) et la sous-semelle (350) créent entre elles un second passage (338) présentant un orifice d'entrée (342) à proximité de la lame (18) et un orifice de sortie (346) en communication fluidique avec le premier passage (282).

12. Outil électrique selon la revendication 11, dans lequel une première partie (286) du premier passage (282) est définie par le carter (14), et dans lequel une seconde partie (290) du premier passage (282) est définie par la semelle (22), ou dans lequel la semelle (22) est couplée de manière pivotante au carter (14) sur un axe longitudinal (366) orienté de manière sensiblement parallèle au premier passage (282), et dans lequel la première partie (286) du premier passage (282) peut subir une rotation par rapport à la seconde partie (290) du premier passage (282) en réaction au pivotement du carter (14) par rapport à la semelle (22).

13. Outil électrique selon la revendication 11, comprenant en outre :
un ensemble d'encliquetage (370) situé entre le carter (14) et la semelle (22), l'ensemble d'encliquetage (370) étant configuré pour une disposition graduelle du carter (14) par rapport à la semelle (22) dans une orientation prédéterminée parmi plusieurs, et
un mécanisme de blocage (386) configuré pour empêcher la rotation du carter (14) par rapport à la semelle (22).

14. Outil électrique selon la revendication 1, dans lequel le carter (14) comporte une partie de corps allongée (30) orientée de manière sensiblement perpendiculaire au sens du va-et-vient de la lame (18), et dans lequel le moteur (38) et la transmission planétaire (62) sont situés dans la partie de corps allongée (30) du carter (14).

15. Outil électrique selon la revendication 14, dans lequel le système manivelle-cadre (58) à deux excentriques est situé dans la tête (34) du carter (14), et dans lequel la partie de corps allongée (30) est configurée pour être saisie par un utilisateur lors de l'utilisation de l'outil électrique (10).
